# EUROPEAN PATENT APPLICATION

(11) **EP 1 705 605 A1**
(43) Date of publication of application: **27.09.2006**
(21) Application number: 03768154.1
(22) Date of filing: 24.12.2003
(51) Int. Cl.: G06Q 10/00

(54) **PERSONAL INFORMATION STORAGE DEVICE AND MOBILE TERMINAL**

(71) Applicant: Fujino, Shigeru, Tokyo 156-0053 (JP); Suginaka, Junko, Minato-ku, Tokyo 105-0001 (JP)
(72) Inventor: SUGINAKA, Junko, Toranomon Garden 408, Tokyo 105-0001 (JP)
(74) Representative: Appelt, Christian W.
(86) International application number: PCT/JP2003/016564
(87) International publication number: WO 2005/062219

(57) **Abstract**

The present invention makes it possible that a user wears a personal information storage device storing personal information including electronic money information and uses a mobile terminal at the user's expense by transmitting the personal information to the mobile terminal by means of short-distance communications. The use of the mobile terminal is permitted on condition that the personal information storage device and the mobile terminal can make short-distance communications with each other, therefore, the mobile terminal can be prevented from unauthorized use. Since no personal information is stored in the mobile terminal, security is high. According to the invention, the personal information storage device comprises information storage means for storing electronic money information; short-distance communication means for making short-distance communications in a noncontact manner; pair relationship establishment means for establishing a pair relationship with a proper mobile terminal by analyzing data received by the short-distance communication means; and information providing control means that transmits electronic money information to the mobile terminal with which a pair relationship has been established by the short-distance communication means.

## Description

### Technical Field

This invention relates to a personal information storage device that can store personal information, including electronic money information, and supply the information to a mobile terminal by means of noncontact short-distance communications, and a mobile terminal that operates on condition that it can communicate with the personal information storage device.

### Background Art

Recently, it has been made possible to complete the transaction by electronic payment with a mobile telephone; and to utilize a mobile telephone as an electronic wallet storing electronic money information in the mobile telephone. Therefore, the prevention of unauthorized use of mobile telephones, protection of personal information and electronic money information, etc. have become important issues.

A technique that makes it easy to change the right to use a mobile terminal device and prevents unauthorized use of it is disclosed in Japanese Unexamined Patent Application Publication No. 2000-312382. The technology includes storing a personal user ID (identification) in an IC chip, which can be accessed through noncontact information communication means. The chip is built into wearable items such as plastic card, finger ring, watch, earring, necklace, pendant, etc., whereby the user can always carry the chip. Furthermore, the mobile terminal device also includes noncontact information communication means. The mobile terminal device reads out user ID by means of communications between the noncontact information communication means as appropriate, and only when it recognizes that the user has the right to use various information communication services, the device allows the user to use a part or the whole of the functions of the mobile terminal device.

### Disclosure of the Invention

However, when electronic money is stored in the mobile terminal device, there is a possibility that the electronic money is lost or the electronic money is wrongfully used due to the loss of the mobile terminal device or unauthorized use of the mobile terminal device.

The present invention was developed to solve thess problems; the object is to prevent unauthorized use of a mobile terminal device and improve the security of electronic money information.

The personal information storage device of the invention comprises: information storage means for storing personal information and electronic money information; short-distance communication means for making short-distance communications in a noncontact manner, pair relationship establishment means that receives a pair relationship establishment request signal from a mobile terminal by the short-distance communication means and transmits personal identification information to the mobile terminal by the short-distance communication means; and information providing control means that receives electronic money information from a financial institution terminal by the short-distance communication means and transmits the electronic money information by the short-distance communication means to a mobile terminal with which the pair relationship has been established. Thereby, electronic money is stored in the personal information storage device and can be used by using the mobile terminal, so that even if the mobile terminal is lost, the lost amount of money is small or zero, whereby the safety is increased.

In addition, the information providing control means receives an electronic money increase request signal of a predetermined designated amount of money from the mobile terminal by the short-distance communication means and transmits an electronic money increase signal of the designated amount of money to the mobile terminal by the short-distance communication means, whereby an arbitrary amount of money that a user desires can be transferred to the mobile terminal.

By integrating the personal information storage device with something to be worn by the user, the possibility of losing the personal information storage device is reduced.

Furthermore, a mobile terminal of the invention comprises short-distance communication means for making short-distance communications in a noncontact manner; pair registration means that transmits a pair relationship establishment request signal to a personal information storage device by the short-distance communication means, receives personal identification information from the personal information storage device by the short-distance communication means, and registers the personal information storage device as having a pair relationship; user setting means for setting and storing personal information including electronic money information by receiving it by the short-distance communication means from the personal information storage device registered as having the pair relationship; and use permission means that transmits a use permission request signal to a personal information storage device set as having the pair relationship by the short-distance communication means, receives a use permission signal from the personal information storage device by the short-distance communication means and makes this mobile terminal available.

In addition, it is desirable that the mobile terminal further comprises electronic money increase means that designates a predetermined amount of money and transmits an electronic money increase request signal by the short-distance communication means to the personal information storage device set as having a pair relationship, and receives an electronic money increase signal of the designated amount of money from the personal information storage device and stores it.

The pair registration means transmits a pair relationship establishment request signal addressed to an arbitrary personal information storage device, and the use permission means transmits a use permission request signal addressedto a specific personal information storage device, whereby crosstalk with other personal information storage devices during use is reduced.

### Brief Description of the Drawings

Fig. 1 is a block diagram showing constructions of a personal information storage device (ID server) and a mobile terminal according to an embodiment of the invention;
Fig. 2 is a block diagram showing a construction example of an ATM terminal that deposits electronic money into the personal information storage device (ID server) of this embodiment;
Fig. 3 is a flowchart describing the operations of pre-registering a mobile terminal of this embodiment by means of the ID server;
Fig. 4 is a flowchart describing the operations of usually using the mobile terminal of this embodiment by the ID server; and
Fig. 5 is a flowchart describing the operations of depositing money into the ID server of this embodiment from the ATM terminal.

### Best Mode for Carrying Out the Invention

Hereinafter, a preferred embodiment of the invention will be described in detail with reference to the accompanying drawings. However, it is not intended that the technical scope of the invention is limited by these embodiments.

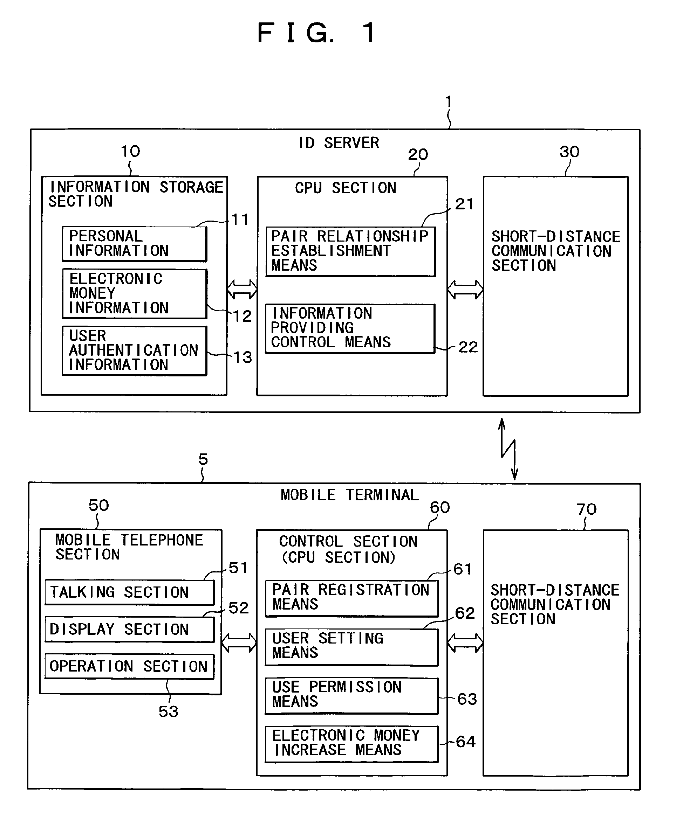

Fig. 1 is a block diagram showing constructions of a personal information storage device (ID server) and a mobile terminal according to an embodiment of the invention.

The personal information storage device (hereinafter, referred to as ID server) 1 is possessed by a user of the mobile terminal 5, and is for authentication of the user. The ID server 1 is integrated with, for example, a necklace, a watch, a finger ring, a key holder, spectacles, or the like that the user wears. The ID server 1 comprises an information storage section 10, a CPU (Central Processing Unit) section 20, and a short-distance communication section 30. In the information storage section 10, personal information 11, electronic money information 12, user authentication information 13, and the like are stored. The CPU section 20 includes pair relationship establishment means 21 and information providing control means 22. The short-distance communication section 30 makes noncontact data communications by using, for example, radio waves.

In Fig. 1, as a typical example of the mobile terminal, a mobile telephone is illustrated. The mobile terminal 5 comprises a mobile telephone section 50, a control section (CPU section) 60, and a short-distance communication section 70. The mobile telephone section 50 includes a talking section 51, a display section 52, an operation section 53, etc. , and operates as a mobile telephone. The control section 60 includes pair registration means 61, user setting means 62, use permission means 63, and electronic money increase means 64. The short-distance communication section 70 makes noncontact data communications by using, for example, radio waves. The mobile terminal 5 can be a PDA (Personal Digital Assistant) or notebook computer other than the mobile telephone.

In this mobile terminal 5, information that specifies the user such as a telephone number and an identification number set by a telephone service provider is not fixedly stored. A password to use a mobile telephone, PDA, or notebook computer and authentication information to use the Internet or e-mail are supplied from the ID server 1, so that the fee is charged to a person related to the personal information stored in the ID server 1. The same applies in the case of purchasing electronic tickets or downloading paid contents.

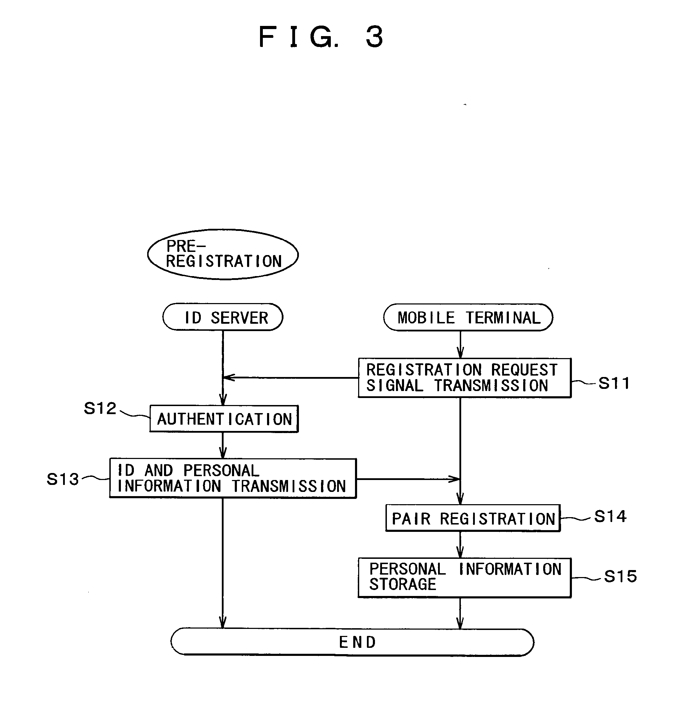

Fig. 3 is a flowchart describing the operations of pre-registering the mobile terminal of the embodiment by means of the ID server. When the power source of the mobile terminal 5 is turned on, the pair registration means 61 displays an ID server registration screen on the display section 52, and urges the user to input an ID server registration password. An owner of the ID server 1 inputs an ID server registration password set in advance for the ID server from the operation section 53 upon bringing the ID server 1 close to the mobile terminal 5. When the ID server registration password is inputted, the pair registration means 61 transmits an ID server registration request, the inputted ID server registration password, and a terminal number set in advance in the mobile terminal 5 as a registration request signal in a predetermined transmission format via the short-distance communication section 70 (Step S11). Atthispoint, a destination address is set to an arbitrary address so that the address can be received by all ID servers 1, and a source address is set to the terminal number of the mobile terminal 5.

The mobile terminal 5 makes transmission in a state in which it makes setting so as to minimize the transmission output of the short-distance communication section 70 and minimize the receiving sensitivity. Thereby, the communication enable range is set to a narrow range of, for example, several centimeters through several tens of centimeters so as to reduce replies from other ID servers and other mobile terminals. The terminal number may be a unique number such as a number set in advance in the short-distance communication section, or network address information set in advance. The terminal number may be generated by generating a random number instead of the predetermined number.

When receiving the registration request signal via the short-distance communication section 30, the pair relationship establishment means 21 of the ID server 1 performs authentication by comparing the received ID server registration password and an ID server registration password stored in advance as one of the user authentication information 13 (Step S12). When the pair relationship establishment means 21 judges that the received ID server registration password is correct, it sets the received terminal number as a destination address, and transmits an ID such as a terminal number set in advance in the ID server 1 (unique number such as a number set in advance in the short-distance communication section 30, network address information, telephone number, or MAC address (Media Access Control address) set in advance) via the short-distance communication section 30 (Step S13).

When the mobile terminal 5 has a fingerprint reading device and transmits fingerprint data of a user, the pair relationship establishment means 21 compares it with fingerprint data stored in advance as the user authentication information 13. User authentication can also be performed by using biological information other than a fingerprint.

When the control section 60 of the mobile terminal 5 receives the ID from the ID server 1, it temporarily stores the received ID as ID of the ID server 1 with which a pair relationship has been established (Step S14). When the pair relationship with the ID server 1 is established, the control section 60 restores the transmission output of the short-distance communication section 70 to a standard level and restores the receiving sensitivity to a standard level. Thereby, the communication enable distance is set to 1 through 2 meters.

Next, the user setting means 62 of the mobile terminal 5 transmits, via the short-distance communication section 70, a telephone number request with a destination address set to an address of the specific one ID server 1 and a source address set to the terminal number of the mobile telephone. When the information providing control means 22 of the ID server 1 receives the telephone number request from the other side of the pair relationship, it transmits a telephone number of the mobile telephone registered in advance as the personal information 11 and provider designated information designated by the mobile telephone service provider to the mobile terminal that transmitted the request, via the short-distance communication section 30.

When the mobile terminal 5 receives the telephone number of the mobile telephone transmitted from the ID server 1 with which the pair relationship has been established and the provider designated information designated by the mobile telephone service provider, it temporarily stores them in a predetermined memory region, and starts the mobile telephone section 50 (Step S15). The mobile telephone section 50 reads the telephone number and the provider designated information temporarily stored in the predetermined memory region, and performs authentication with the mobile telephone service provider and makes the mobile telephone available. Thereby, the right to use the mobile telephone is provided for an individual person who is identified according to the personal information that the ID server 1 holds, and the fee is charged to the individual person. The mobile telephone section 50 displays a standby screen or the like on the display section. Thereby, the user can recognize that the mobile telephone has been made available.

In the information storage section 10 of the ID server 1, as personal information 11, various personal information such as received calls, dialed numbers, address book, e-mail addresses, e-mails, and information on use of the Internet is stored. When the mobile terminal 5 needs the various personal information concerning the use of the mobile telephone, it collects necessary information from the ID server 1 and displays them on the display section 52. When new personal information is generated according to use of the mobile telephone, the mobile terminal 5 transfers the new information to the ID server 1. The CPU section 20 of the ID server 1 stores the transferred information in the information storage section 10.

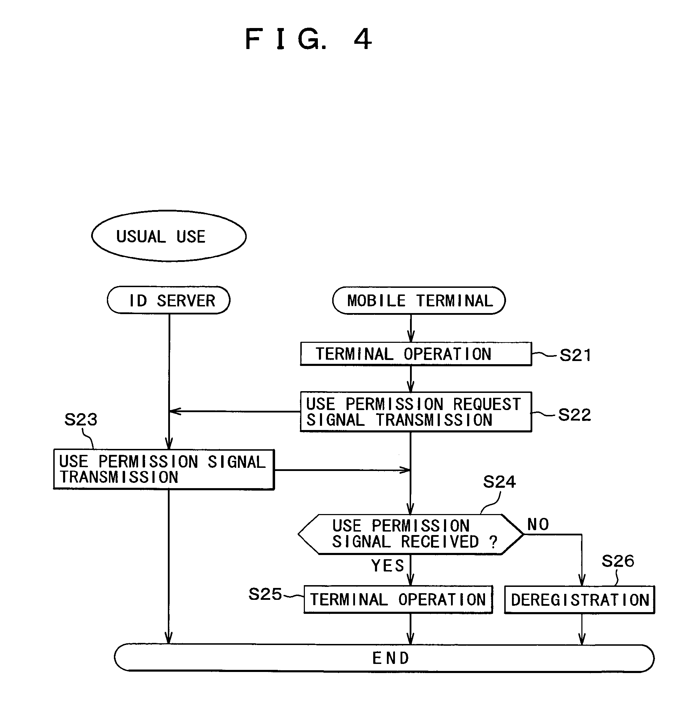

Fig. 4 is a flowchart describing the operations of usually using the mobile terminal of this embodiment by the ID server. The use permission means 63 of the mobile terminal 5 transmits a use permission request signal to the ID server 1 with which the pair relationship has been established (Step S22) each time a user operates the mobile terminal 5 (Step S21), and when the ID server 1 transmits a use permission signal to the mobile terminal 5 (S23) and the mobile terminal 5 receives the use permission signal (Step S24), the operation is processed as being effective. Thereby, as long as the mobile terminal 5 and the ID server 1 are in a range in which they can communicate with each other, the mobile terminal 5 can be normally operated (Step S25). Instead of confirmation of the presence of the ID server 1 for each operation, it is also possible that the presence of the ID server 1 is confirmed at predetermined time intervals. Instead of transmission of a reply request from the mobile terminal 5 to the ID server 1, it is also possible that the ID server 1 transmits a reply request to the mobile terminal 5 at predetermined time intervals and the mobile terminal 5 returns a reply signal.

When the presence of the ID server 1 cannot be confirmed, the use permission means 63 of the mobile terminal 5 stops the operations including the display operation of the mobile terminal 5 (Step S26). When the presence of the ID server 1 can be confirmed within a predetermined time (for example, several minutes) from the operation stop timing, the use permission means 63 makes the mobile terminal 5 operable. When the state in which the presence of the ID server 1 cannot be confirmed continues over the predetermined time, the use permission means 63 turns off the power source of the mobile termina15. Thereby, the personal information transferred from the ID server 1 to the mobile terminal 5 is all erased. To use this mobile terminal 5, a new ID server 1 which is to be paired must be registered.

Thus, without storing the user's personal information in the mobile terminal 5, the user's personal information is stored in the ID server 1 and the mobile terminal 5 is made operable on condition that the ID server 1 and the mobile terminal 5 are within a range in which they can make short-distance communications with each other, whereby the mobile terminal 5 can be prevented from unauthorized use and the personal information can be protected.

To make electronic payment by using the mobile terminal 5, the electronic money information 12 stored in the ID server 1 is transferred to the mobile terminal 5 to make the electronic money available. It is also possible that a password or the like exclusively for the electronic money is inputted prior to transferring of the electronic money. It is also possible that, instead of the password, biological information is used for authentication of the user's identity.

It is also possible that an amount of electronic money inputted via the operation section 53 is transferred to the mobile terminal 5. It is also allowed that, instead of input of the amount of money by the user, an amount of electronic money necessary for the electronic payment is transferred. In addition, it is also possible that the electronic money information transferred to the mobile terminal 5 is returnable to the ID server 1.

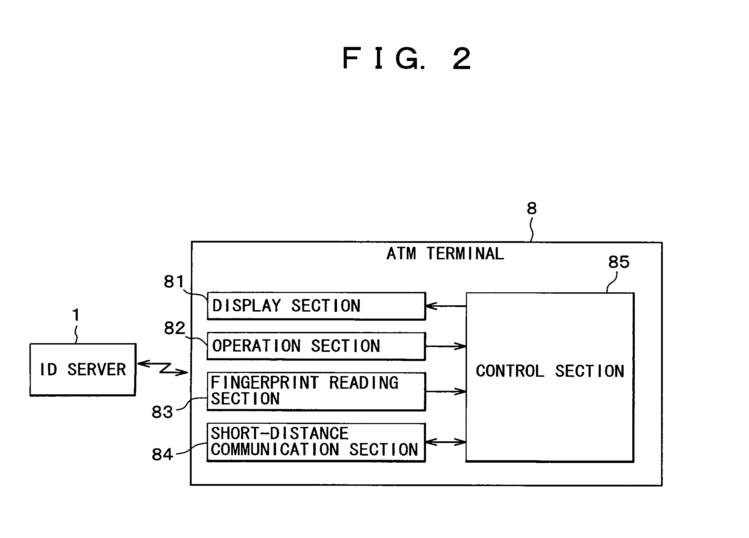

Fig. 2 is a block diagram showing a construction example of an ATM terminal that deposits electronic money into the ID server. The ATM (Automated Teller Machine) terminal (financial institution terminal) 8 is installed at a financial institution, store, or the like. The ATM terminal 8 comprises a display section 81, an operation section 82, a fingerprint reading section 83, a short-distance communication section 84, and a control section 85. The ATM terminal may be a store cash register, an MMK (Multimedia Kiosk: multipurpose terminal installed at a convenience store, to be used for selling tickets and prepaid cards), an automatic vending machine, a ticket machine at a station, or the like.

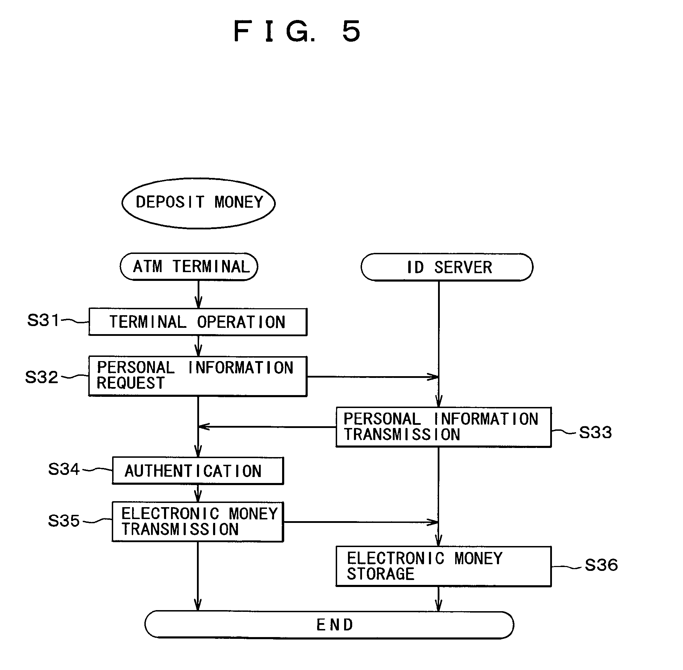

Fig. 5 is a flowchart describing the operations of depositing money into the ID server of this embodiment from the ATM terminal. A user operates the operation section 82 of the ATM terminal 8 while possessing the ID server 1, and after designating an amount of electronic money, the user makes the fingerprint reading section 83 read his/her fingerprint (Step 31). The control section 85 requests transmission of fingerprint data that is personal information stored in the ID server 1 via the short-distance communication section 84 (Step S32). The ID server 1 transmits fingerprint data registered in advance as personal information (Step S33). The fingerprint data transmitted from the ID server 1 is received by the short-distance communication section 84 and supplied to the control section 85. The control section 85 compares the fingerprint read by the fingerprint reading section 83 and the fingerprint data transmitted from the ID server 1 (Step S34). When the fingerprint data matches, the control section 85 generates electronic money information of the designated amount of money, and transmits the electronic money information via the short-distance communication section 84 (Step S35). The ID server 1 stores the received electronic money information in the information storage section 10 (Step S36). It is also possible that the ID server 1 transmits the received electronic money information to the ATM terminal 8, and after receiving a confirmation signal indicating that the electronic money information has no error from the ATM terminal 8, it stores the received electronic money information in the information storage section 10.

The publications, patents, and patent applications cited in this specification are all to be incorporated into this specification as references without change.

### Industrial Applicability

The mobile terminal 5 of the invention is applicable not only to mobile telephones in the narrow sense but also to mobile terminals such as PHSs (Personal Handyphone Systems), IP (Internet Protocol) phones, PDAs, and notebook computers. The mobile terminal 5 can be a remote controller for controlling a television, video recorder, home server, or the like which are adapted to ubiquitous computing. Thereby, by using the remote controller that is a device for controlling home electric appliances, viewing fees of paid contents and prices of mail-order services can be charged to a person who uses the remote controller. Furthermore, it is also possible that the mobile terminal 5 is a radio apparatus that is installed in an automobile and performs a function for payment of highway toll fares and payment at gas stations; a music player; a car navigation system; and a control device of an immobilizer for controlling the start of a vehicle.

The ID server 1 may be formed in a card shape instead of being integrated with something to be worn such as finger ring, necklace, pendant, or the like. The ID server 1 may be a sheet of film to be stuck on the skin. Or, the ID server 1 may be indirectly worn, that is, a slot for inserting a card is made in underwear (or clothes) and a card is inserted therein.

## Claims

1. A personal information storage device comprising:
information storage means for storing personal information and electronic money information;
short-distance communication means for making short-distance communications in a noncontact manner;
pair relationship establishment means that receives a pair relationship establishment request signal from a mobile terminal by said short-distance communication means and transmits personal identification information to said mobile terminal by said short-distance communication means; and
information providing control means that receives electronic money information from a financial institution terminal by said short-distance communication means and transmits said electronic money information by said short-distance communication means to a mobile terminal with which said pair relationship has been established.

2. The personal information storage device according to Claim 1, wherein said information providing control means receives an electronic money increase request signal of a predetermined designated amount of money from said mobile terminal by said short-distance communication means and transmits an electronic money increase signal of said designated amount of money to a mobile terminal by said short-distance communication means.

3. The personal information storage device according to Claim 1 or 2, wherein said personal information storage device is integrated with something that a user wears.

4. A mobile terminal comprising:
short-distance communication means for making short-distance communications in a noncontact manner;
pair registration means that transmits a pair relationship establishment request signal to a personal information storage device by said short-distance communication means, receives personal identification information from said personal information storage device by said short-distance communication means, and registers said personal information storage device as having a pair relationship;
user setting means for setting and storing personal information including electronic money information by receiving it by said short-distance communication means from said personal information storage device registered as having the pair relationship; and
use permission means that transmits a use permission request signal to a personal information storage device set as having the pair relationship by said short-distance communication means, receives a use permission signal from said personal information storage device by said short-distance communication means, and makes this mobile terminal available.

5. The mobile terminal according to Claim 4, further comprising electronic money increase means that designates a predetermined amount of money and transmits an electronic money increase request signal by said short-distance communication means to a personal information storage device set as having a pair relationship, and receives an electronic money increase signal of said designated amount of money from said personal information storage device by said short-distance communication means and stores it.

6. The mobile terminal according to Claim 4 or 5, wherein said pair registration means transmits a pair relationship establishment request signal addressed to an arbitrary personal information storage device, and said use permission means transmits a use permission request signal addressed to a specific personal information storage device.
